(19) Europäisches Patentamt
European Patent Office
Office européen des brevets

(11) **EP 1 809 040 A2**

(12) **EUROPEAN PATENT APPLICATION**

(43) Date of publication:
**18.07.2007 Bulletin 2007/29**

(51) Int Cl.:
***H04N 7/26*** *(2006.01)*   ***H04N 7/46*** *(2006.01)*

(21) Application number: **06125975.0**

(22) Date of filing: **12.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.01.2006 US 758227 P**
 **20.01.2006 US 760401 P**
 **10.03.2006 KR 20060022871**

(71) Applicant: **Samsung Electronics Co., Ltd.**
**Yeongtong-gu**
**Suwon-city, Gyeonggi-do 442-742 (KR)**

(72) Inventors:
• **Han, Woo-jin**
**Gyeonggi-do (KR)**
• **Kim, So-young**
**Seoul (KR)**
• **Lee, Tammy**
**Seocho-gu, Seoul (KR)**
• **Lee, Kyo-hyuk**
**Gyeonggi-do (KR)**

(74) Representative: **Davies, Robert Ean**
**Appleyard Lees**
**15 Clare Road**
**Halifax HX1 2HY (GB)**

(54) **Multilayer-based video encoding/decoding method and video encoder using smoothing prediction**

(57)    A method and apparatus for reducing block artifacts during a residual prediction in a multilayer-based video coding are disclosed. The multilayer-based video encoding method includes obtaining a difference between a predicted block for a second block of a lower layer, which corresponds to a first block included in a current layer, and the second block; adding the obtained difference to a predicted block for the first block; smoothing a third block generated as a result of the addition using a smoothing function; and encoding a difference between the first block and the smoothed third block.

**FIG. 4**

EP 1 809 040 A2

**Description**

The present invention relates to a video coding technology, and more particularly, to a method and apparatus for reducing block artifacts during a residual prediction in a multilayer-based video coding.

With the development of information and communication technologies, multimedia communications, as well as text and voice communications, are increasing . The existing text-centered communication systems are insufficient to satisfy consumers' diverse desires, and thus multimedia services that can accommodate diverse forms of information such as text, image, music, and others, are increasing. Since multimedia data is large, mass storage media and wide bandwidths are respectively required for storing and transmitting it. Accordingly, compression coding techniques are required to transmit the multimedia data.

The basic principle of data compression is to remove data redundancy. Data can be compressed by removing spatial redundancy such as a repetition of the same color or object in images, temporal redundancy such as similar neighboring frames in moving images or continuous repetition of sounds and visual/perceptual redundancy, which considers the human insensitivity to high frequencies. In a general video coding method, the temporal redundancy is removed by temporal filtering based on motion compensation, and the spatial redundancy is removed by a spatial transform.

In order to transmit multimedia after the data redundancy is removed, transmission media are required, the performances of which differ. Presently used transmission media have diverse transmission speeds. For example, an ultrahigh-speed communication network can transmit several tens of megabits of data per second and a mobile communication network has a transmission speed of 384 kilobits per second. In order to support the transmission media in such a transmission environment and to transmit multimedia with a transmission rate suitable for the transmission environment, a scalable video coding method is most suitable.

The scalable video coding method is a coding method that can adjust a video resolution, a frame rate, and a signal-to-noise ratio (SNR), i.e., a coding method that supports diverse scalabilities, by truncating a part of a compressed bitstream in accordance with peripheral conditions such as a transmission bit rate, transmission error rate, and system resources.

In the current scalable video coding standard that has been expedited by Joint Video Team (JVT) which is a joint working group of Moving Picture Experts Group (MPEG) and International Telecommunication Union (ITU), research is under way for implementing the multilayered scalability, based on H.264 (hereinafter referred to as "H.264 scalable extension (SE)").

The H.264 SE and the multilayered scalable video codec basically support four prediction modes: an inter-prediction, a directional intra prediction (hereinafter referred to as "intra prediction"), a residual prediction, and an intra-base prediction. "Prediction" means a technique of compressively displaying the original data using predicted data generated from information commonly available in an encoder and a decoder.

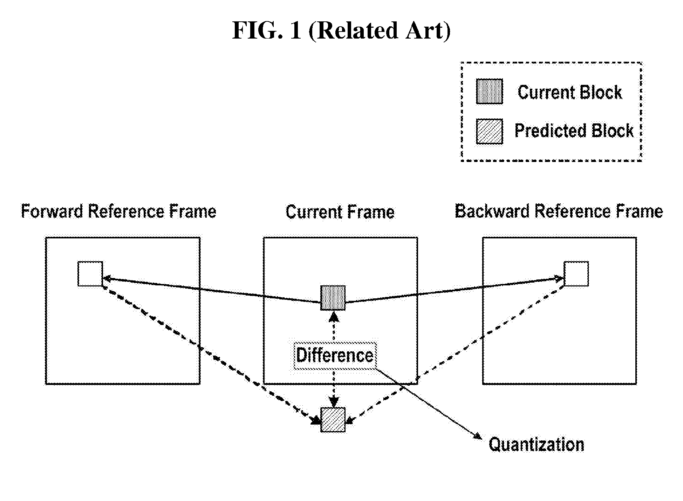

Among the four prediction modes as described above, the inter-prediction mode is a prediction mode generally used even in the existing single-layered video codec. The inter-prediction, as illustrated in FIG. 1, is a method for searching for a block that is most similar to a certain block (i.e., current block) of a current block from at least one reference frame, obtaining a predicted block that can best express the current block from the searched block, and then quantizing a difference between the current block and the predicted block.

Inter-prediction is classified into a bidirectional prediction for which two reference frames are used, a forward prediction for which a previous reference frame is used, and a backward prediction for which a following reference frame is used.

On the other hand, intra prediction is a technique that is also used in the single-layered video codec such as H.264. Intra prediction is a method for predicting the current block using pixels adjacent to the current block among neighboring blocks of the current block. Intra prediction is different from other prediction methods in that it uses only the information in the current frame, and does not refer to other frames in the same layer or frames of other layers.

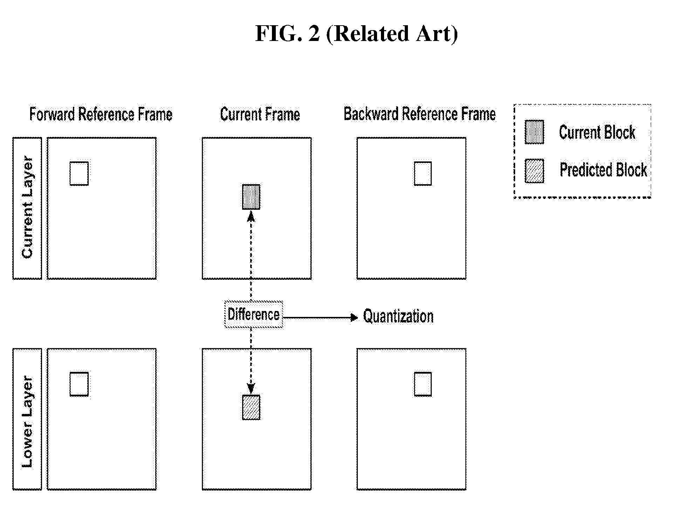

Intra-base prediction can be used in the case where the current frame has a frame of a lower layer (hereinafter referred to as a "base frame") having the same temporal position. As illustrated in FIG. 2, a macroblock of the current frame can be efficiently predicted from a macroblock of the base frame that corresponds to the macroblock of the current frame. That is, a difference between the macroblock of the current frame and the macroblock of the base frame is used for the prediction.

If the resolution of a lower layer and the resolution of the current layer are different from each other, the macroblock of the base frame should be up-sampled with the resolution of the current layer before the difference is obtained. This intra-base prediction is effective in a video having a very fast movement or a video in which a scene change occurs.

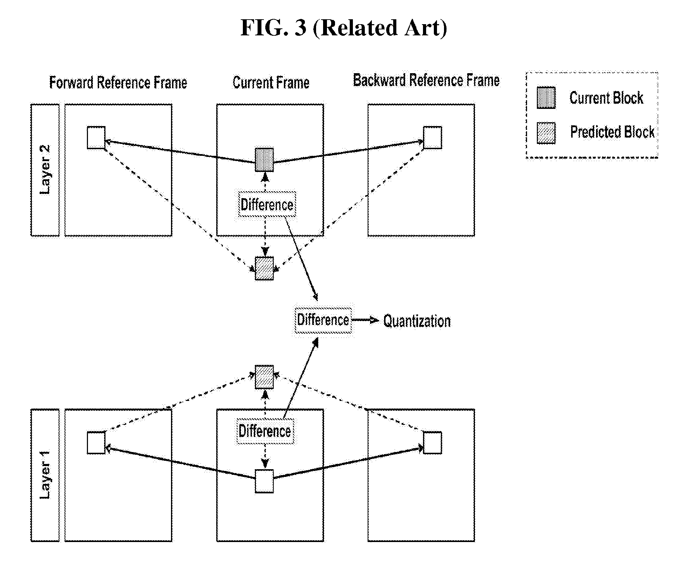

Last, the inter-prediction mode with residual prediction (hereinafter referred to as "residual prediction") is a prediction mode whereby the existing single-layered inter-prediction is extended to a multilayered form. As illustrated in FIG. 3, according to the residual prediction, the difference generated in the inter-prediction process of the current layer is not directly quantized, but a difference between the difference and a difference generated in the inter-prediction process of the lower layer is obtained and quantized.

In consideration of the characteristics of diverse video sequences, one efficient method is selected among the four prediction methods as described above for each macroblock constituting the frame. For example, in a video sequence having a slow motion, inter-prediction and residual prediction would be mainly selected, while in a video sequence having a fast movement, the intra-base prediction would be mainly selected.

The multilayered video codec has a relatively complicated prediction structure in comparison to the single-layered video codec. Also, since the multilayered video codec mainly uses an open-loop structure, many blocking artifacts occur in the multilayered video codec in comparison to the single-layered codec. Particularly, in the case of the above-described residual prediction, a residual signal of a lower-layer frame is used, and if there is a great difference between the residual signal and the characteristic of the inter-predicted signal of the current-layer frame, a severe distortion may occur.

By contrast, during intra-base prediction, the predicted signal of the macroblock of the current frame, i.e., the macroblock of the base layer, is not the original signal, but a signal that has been quantized and restored. Accordingly, the predicted signal can be commonly obtained in both the encoder and the decoder, and thus no mismatch occurs between the encoder and the decoder. In particular, since the difference between the macroblock of the base frame and the macroblock of the current frame are obtained after a smoothing filter is applied to the predicted signal, the block artifacts are greatly reduced.

However, according to the low-complexity decoding condition and single-loop decoding condition that have been adopted as the current working draft of the H.264 SE, intra-base prediction is limited in use. That is, in the H.264 SE, intra-base prediction can be used only when a specified condition is satisfied so that although the encoding is performed in a multilayered manner, the decoding can be performed in a manner similar to the single-layered video codec.

According to the low-complexity decoding condition, intra-base prediction is used only when the macroblock type of the macroblock of the lower layer that corresponds to a certain macroblock of the current layer refers to the intra prediction mode or the intra base mode prediction mode. This is to reduce the amount of computation in a motion compensation process that requires the largest amount of computation in the decoding process. By contrast, since intra-base prediction is used under limited circumstances, the performance in a video having a fast movement is greatly lowered.

Accordingly, in the case of using inter-prediction or residual prediction according to the low-complexity condition or other conditions, a technology that can reduce various kinds of distortions such as the encoder-decoder mismatch and block artifacts is desired.

Accordingly, embodiments of the present invention address the above-mentioned problems occurring in the prior art, and aim to improve the coding efficiency during an inter-prediction or residual prediction in a multilayer-based video codec.

Additional advantages and features of the invention will be set forth in part in the description which follows and in part will become apparent to those having ordinary skill in the art upon examination of the following or may be learned from practice of the invention.

In an aspect of the invention there is provided a video encoding method, which includes obtaining a difference between a predicted block for a second block of a lower layer, which corresponds to a first block included in a current layer, and the second block; adding the obtained difference to a predicted block for the first block; smoothing a third block generated as a result of the addition using a smoothing function; and encoding a difference between the first block and the smoothed third block.

In another aspect of the present invention, there is provided a method of generating a bitstream, which includes smoothing a predicted signal for a first block included in a current layer; encoding a difference between the first block and the smoothed predicted signal; and generating the bitstream that includes the encoded difference and a first flag indicating whether the smoothing has been applied.

In still another aspect of the present invention, there is provided a video decoding method, which includes restoring a residual data of a first block from texture data of the first block of a current frame included in an input bitstream; restoring a residual signal for a second block of a base layer that is included in the bitstream and corresponds to the block; adding the residual signal for the second block to a predicted block for the first block; smoothing a third block generated as a result of the addition using a smoothing filter; and adding the residual signal for the first block to the smoothed third block.

In still another aspect of the present invention, there is provided a video decoding method, which includes restoring residual data of a first block from texture data of the first block of a current frame included in an input bitstream; restoring a residual signal for a second block of a base layer that is included in the bitstream and corresponds to the block; adding the first residual signal to the second residual signal; smoothing an inter-predicted block for the first block using a smoothing filter; and adding the result of the addition to the smoothed inter-predicted block.

In still another aspect of the present invention, there is provided a video encoder, which includes a portion that obtains a difference between a predicted block for a second block of a lower layer, which corresponds to a first block included in a current layer, and the second block; a portion that adds the obtained difference to a predicted block for the first block; a portion that smooths a third block generated as a result of the addition using a smoothing function; and a portion that encodes a difference between the first block and the smoothed third block.

In still another aspect of the present invention, there is provided a video decoder, which includes a portion that restores residual data of a first block from texture data of the first block of a current frame included in an input bitstream; a portion that restores a residual signal for a second block of a base layer that is included in the bitstream and corresponds to the block; a portion that adds the residual signal for the second block to a predicted block for the first block; a portion that smooths a third block generated as a result of the addition using a smoothing filter; and a portion that adds the residual signal for the first block to the smoothed third block.

For a better understanding of the invention, and to show how embodiments of the same may be carried into effect, reference will now be made, by way of example, to the accompanying diagrammatic drawings in which:

FIG. 1 is a view explaining a conventional inter-prediction technique;
FIG. 2 is a view explaining a conventional intra-base prediction technique;
FIG. 3 is a view explaining a conventional residual prediction technique;
FIG. 4 is a view explaining a smoothing prediction technique according to an embodiment of the present invention;
FIGs. 5 to 8 are views illustrating examples of applying a smoothing filter in the unit of a macroblock;
FIG. 9 is a graph illustrating PSNR obtained using another adaptive filter, based on PSNR obtained using a 1:2:1 smoothing filter;
FIG. 10 is a block diagram illustrating the construction of a video encoder according to an embodiment of the present invention;
FIG. 11 is a block diagram illustrating the construction of a video decoder according to an embodiment of the present invention; and
FIG. 12 is a block diagram illustrating the construction of a video decoder according to another embodiment of the present invention.

Hereinafter, exemplary embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. Matters defined in the description, such as details of construction and elements, are merely provided to assist those of ordinary skill in the art in a comprehensive understanding of the invention, and the present invention is only defined within the scope of the appended claims. In the entire description of the present invention, the same drawing reference numerals are used for the same elements across various figures.

If a block of a current frame is OF, a predicted block obtained by performing an inter-prediction of the block is $P_F$, a block of a base layer corresponding to the block of the current frame is $O_B$, and a predicted block obtained by performing an inter-prediction of the base frame is $P_B$, a residual signal $R_B$ that $O_B$ has is obtained from $O_B - P_B$.

In this case, $O_B$, $P_B$, and $R_B$ are values that have already been quantized and restored, and OF and $P_F$ are original signals in the case of an open-loop structure, while they are values that have been quantized and restored. If a value to be encoded in the current frame is $R_F$, a residual prediction can be expressed as Equation (1). In Equation (1), U denotes an up-sampling function. Since the up-sampling function is applied only when resolutions of the current layer and the lower layer are different from each other, it is indicated as {U} in a sense that it can be selectively applied.

$$R_F = O_F - P_F - [U] \cdot R_B \qquad \dots\dots (1)$$

On the other hand, the intra-base prediction can be expressed as Equation (2)

$$R_F = O_F - [U] \cdot O_B \qquad \dots\dots (2)$$

In comparing Equation (1) with Equation (2), they seem to have no common feature. However, by re-expressing them by Equation (3) and Equation (4), their similarities can be compared with each other.

$$R_F = O_F - (P_F + [U] \cdot R_B) \qquad \text{.......} (3)$$

$$R_F = O_F - [U] \cdot B(P_B + R_B) \qquad \text{.......}(4)$$

In Equation (4), B denotes a deblocking function. In comparing Equations (3) and (4), $R_B$ is commonly used in Equations (3) and (4). The greatest difference between them is that the inter-predicted block $P_F$ of the current layer is used in Equation (3), and the inter-predicted block $P_B$ of the lower layer is used in Equation (4). In the case of the intra-base prediction, if a deblocking function and an up-sampling function are applied, the image of the restored frame becomes smooth, and thus the block artifacts are reduced.

By contrast, in Equation (3), the residual signal $R_B$ of the base frame obtained from $P_B$ is added to the inter-predicted block $P_F$ of the current frame, and thus inter-mismatch or block artifacts may occur. Although this problem may be mitigated if the intra-base prediction is used, the intra-base prediction cannot be used even in the case where the efficiency of the intra-base prediction is not higher than that of the residual prediction. Also, in the case where the low-complexity decoding condition is applied, blocks for which the intra-base prediction is not used are increased even in a situation where the intra-base prediction is more efficient, and this causes a remarkable deterioration of the performance. Accordingly, it is required to devise a proper measure that can reduce the block artifacts even in the case where the residual prediction is used. In the present invention, the existing residual prediction is supplemented by adding a smoothing function F to Equation (3). According to the present invention, data $R_F$ of the current block to be quantized is expressed as Equation (5).

$$R_F = O_F - F(P_F + [U] \cdot R_B) \qquad \text{......} (5)$$

The prediction mode according to Equation (5) can be applied to the inter-prediction as it is. That is, in the case of inter-prediction, it can be considered that $R_B$ is 0, and thus $R_F$ can be expressed as Equation (6).

$$R_F = O_F - F(P_F) \qquad \text{.......} (6)$$

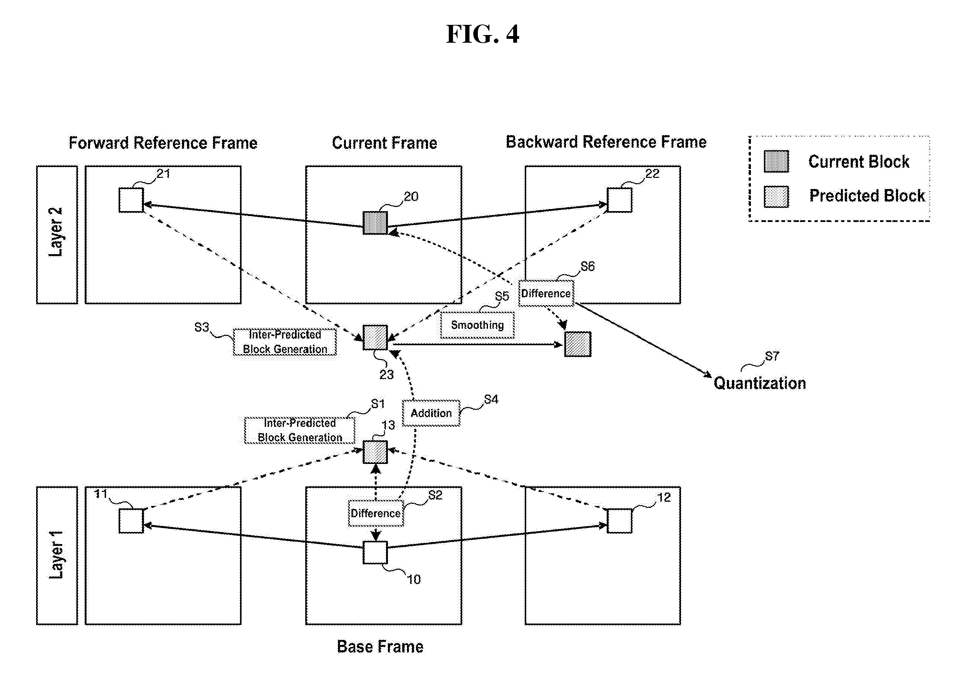

As in Equations (5) and (6), the technique adopting a smoothing filter during the existing residual prediction or inter-prediction is defined as "smoothing prediction". A detailed process of performing the smoothing prediction will be explained with reference to FIG. 4. A process of encoding a certain block 20 of the current frame (hereinafter referred to as a "current block") is exemplified in FIG. 4. A block 10 in the base frame that corresponds to the current block 20 will hereinafter be called a "base block".

First, an inter-predicted block 13 for a base block 10 is generated from blocks 11 and 12 in peripheral reference frames (i.e., forward reference frame, backward reference frame, and others) of a corresponding lower layer by the base block 10 and motion vectors S1. Then, a difference between the base block and the predicted block 13 (corresponding to $R_B$ in Equation (5)) is obtained S2. Also, an inter-predicted block 23 for a base block 20 (corresponding to $P_F$ in Equation (5)) is generated from blocks 21 and 22 in peripheral reference frames of a corresponding current layer by the base block 20 and motion vectors S3. The step S3 may be performed prior to the steps S1 and S2. Generally, the "inter-predicted block" means a predicted block for a certain block in a frame to be encoded, which is obtained from image(s) of reference frames corresponding to the certain block. The correspondence of the block to the image is indicated by a motion vector. Generally, the inter-predicted block, if one reference frame exists, means the corresponding image itself or a weighted sum of the corresponding images if plural reference frames exist.

Then, the predicted block 23 and the difference obtained in step S2 are added together S4, and a block generated as a result of the addition (corresponding to $P_F + R_B$ in Equation (5)) is smoothed using a smoothing filter S5. Last, a difference between the current block 20 and a block generated as a result of the smoothing (corresponding to $F(P_F + R_B)$ in Equation (5)) is obtained S6, and then the obtained difference is quantized S7.

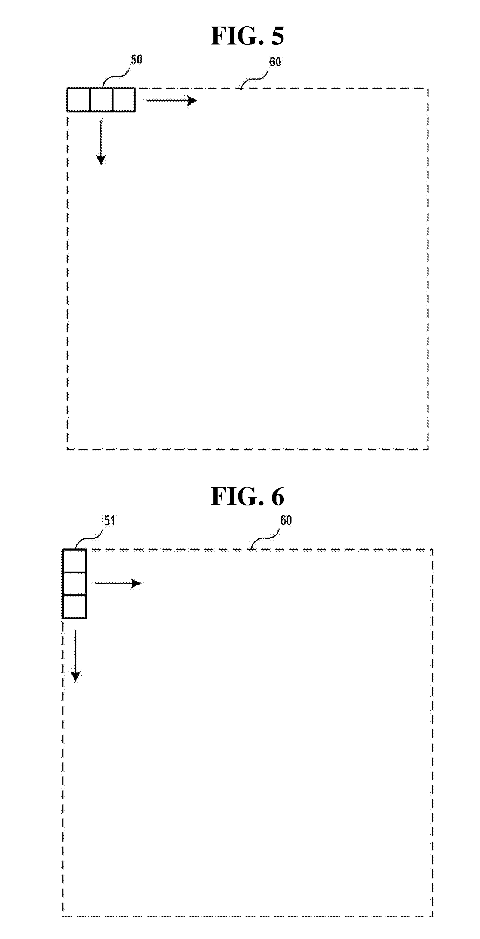

FIG. 4 illustrates the smoothing prediction process based on the residual prediction. A smoothing prediction process based on the inter-prediction is much simpler than that based on the residual prediction. Specifically, since $R_B$ related to the computation of the lower layer in FIG. 5 is omitted, steps S1, S2, and S3 illustrated in FIG. 4 are all omitted. Accordingly, the inter-predicted block 23 generated in the current layer is smoothed by the smoothing filter, and then the difference between the current block 20 and a block generated as a result of the smoothing (corresponding to $F(P_F)$ in Equation (6)) is quantized. On the other hand, it is also an important matter which smoothing filter F is actually to be applied to the smoothing prediction. A conventional deblocking filter B may be used as such a smoothing filter F. Also, a combination of an up-sampling function U and a down-sampling function D may be used because the smoothing effect can also be obtained by the combination of the up-sampling function and the down-sampling function.

However, since the deblocking function B, the up-sampling function, and the down-sampling function require a considerable amount of computation, and the down-sampling function generally serves as a very strong low-pass filtering, there is a possibility that the details of an image deteriorate greatly during the prediction.

Accordingly, it is required that the smoothing filer applying process is performed with a small amount of computation. For this, the smoothing filter F can be simply expressed by a linear function among a predetermined number of neighboring pixels. For example, if the predetermined number is three, a pixel value x'(n) that is filtered from the original pixel value x(n) by the smoothing filter F can be expressed as Equation (7).

$$x'(n) = \alpha * x(n-1) + \beta * x(n) + \gamma * x(n+1) \quad \ldots\ldots (7)$$

Values of $\alpha$, $\beta$, and $\gamma$ can be properly selected so that their sum is 1. For example, by selecting $\alpha=1/4$, $\beta=1/2$, and $\gamma=1/4$ in Equation (7), the weight value of the corresponding pixel to be filtered can be increased in comparison to the neighboring pixels. Of course, more pixels can be selected as neighboring pixels in Equation (7).

Using the smoothing filter F having a simple form as described above, the amount of computation can be greatly reduced, and the deterioration of the image details occurring during the down-sampling and so on can be reduced as well.

FIGs. 5 to 8 are views illustrating examples of applying a smoothing filter with respect to a 16x16 macroblock 60.

In the embodiment of the present invention, the smoothing filter is applied to the corresponding macroblock 60 in four steps as follows. Referring to FIG. 5, the first step among the four steps will be explained.

First, a horizontal window 50 having a size that corresponds to three neighboring pixels arranged in a horizontal direction is set, and the smoothing filter F that is a linear function is applied to the initial three neighboring pixels included in the horizontal window 50. Once the smoothing filter F is applied, the horizontal window 50 is moved by one pixel in a horizontal direction, and the smoothing filter F is applied again. The above-described process is repeated, and if the horizontal window 50 reaches the right boundary of the macroblock 60, the horizontal window 50 is returned to its initial position and is moved by one pixel in a lower direction, and then the smoothing filter F is applied again as the horizontal window is moved in the horizontal direction. This process is performed for the entire macroblock 60. In the first step, the filtering is performed 224 (= 14 (width) $\times$ 16 (length)) times with respect to one macroblock.

Then, referring to FIG. 6, the second step among the four steps will be explained.

A vertical window 51 having a size that corresponds to three neighboring pixels arranged in a vertical direction is set, and the smoothing filter F that is a linear function is applied to the initial three neighboring pixels included in the vertical window 51. Once the smoothing filter F is applied, the vertical window 51 is moved by one pixel in the horizontal direction, and the smoothing filter F is applied again. The above-described process is repeated, and if the vertical window 51 reaches the right boundary of the macroblock 60, the vertical window 51 is returned to its initial position and is moved by one pixel in a lower direction, and then the smoothing filter F is applied again as the vertical window is moved in the horizontal direction. This process is performed for the entire macroblock 60. In the second step, the filtering is performed 224 (= 14 (width) $\times$ 16 (length)) times with respect to one macroblock.

Through the first step and the second step, the application of the smoothing filer F to pixels inside the macroblock 60, which are not adjacent to the macroblock boundary, is completed. Next, the application of the smoothing filter to the pixels adjacent to the upper boundary of the macroblock 60, and the application of the smoothing filter to the pixels adjacent to the left boundary of the macroblock 60 are required.

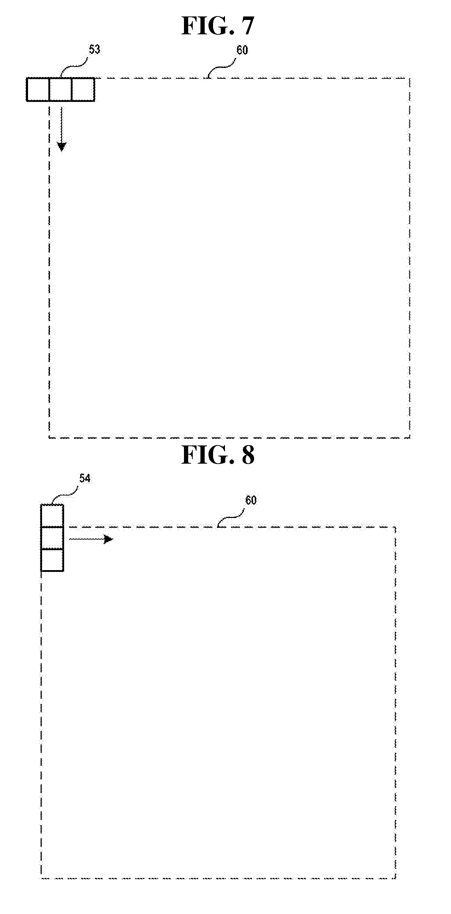

Referring to FIG. 7, the third step, which corresponds to the filtering process with respect to the left boundary, among the four steps will be explained.

A horizontal window 53 having a size that corresponds to three neighboring pixels arranged in a horizontal direction is set so that the upper left pixel of the macroblock 60 is positioned in the center of the horizontal window 53. Then, the smoothing filter F that is a linear function is applied to the initial three neighboring pixels included in the horizontal window 53. Once the smoothing filter F is applied, the horizontal window 53 is moved by one pixel in a vertical direction, and the smoothing filter F is applied again. The above-described process is repeated until the horizontal window 53 reaches the lower boundary of the macroblock 60. In the third step, the filtering is performed 16 times with respect to one macroblock.

Last, referring to FIG. 8, the fourth step, which corresponds to the filtering process with respect to the upper boundary, among the four steps will be explained.

A vertical window 54 having a size that corresponds to three neighboring pixels arranged in a vertical direction is set so that the upper left pixel of the macroblock 60 is positioned in the center of the vertical window 54. Then, the smoothing filter F that is a linear function is applied to the initial three neighboring pixels included in the vertical window 54. Once the smoothing filter F is applied, the vertical window 54 is moved by one pixel in a horizontal direction, and the smoothing filter F is applied again. The above-described process is repeated until the vertical window 54 reaches the right boundary of the macroblock 60. In the fourth step, the filtering is performed 16 times with respect to one macroblock.

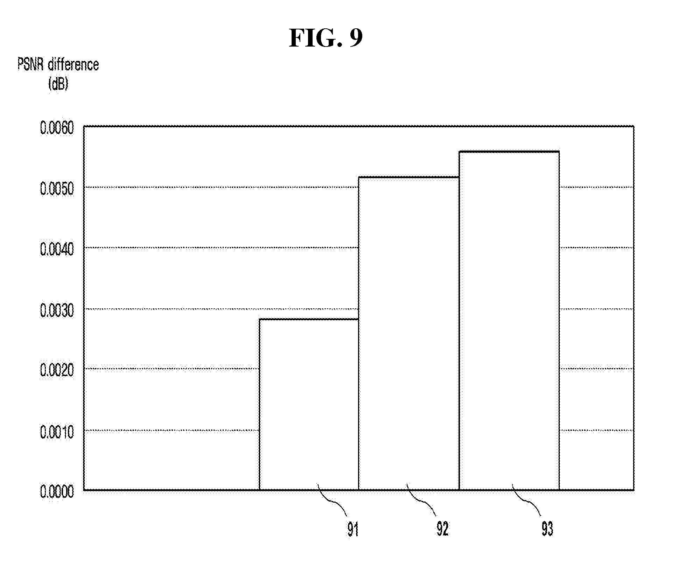

The change of the order of the respective four steps does not exert a great influence upon the effects achieved according to the present invention. In the embodiments of the present invention as illustrated in FIGs. 5 to 8, $\alpha{:}\beta{:}\gamma$ is set to 1:2:1 in Equation (7). However, there is no great difference in effect even if the ratio is changed. This can be demonstrated from the result of an experiment as illustrated in FIG. 9.

FIG. 9 is a graph illustrating PSNR obtained by compressing the same sequence using another adaptive filter, based on PSNR obtained by compressing a football CIF sequence using a 1:2:1 smoothing filter.

In FIG. 9, a graph 91 represents the result of adaptively using a 1:2:1 smoothing filter and a 1:3:1 smoothing filter, a graph 92 represents the result of adaptively using a 1:2:1 smoothing filter and a 1:14:1 smoothing filter, and a graph 93 represents the result of adaptively using a 1:2:1 smoothing filter and a 1:6:1 smoothing filter. Referring to FIG. 9, it can be seen that in comparison to the case where the 1:2:1 smoothing filter is used, PSNR is only improved by about 0.005dB at maximum even if the adaptive filter is used.

The present embodiment of the invention shows an example where the smoothing filter is applied in the unit of a macroblock. However, it will be fully understood by those skilled in the art that the smoothing filter can be applied in the unit of a 4x4 sub-block or any other unit.

As described above, by applying the smoothing filter according to Equation (5), the problem that the coding performance deteriorates due to the existing signal-loop decoding condition can be somewhat improved. However, if the smoothing function is used in the single-loop decoding proposed in order to reduce the complexity, the complexity may be somewhat increased.

On the assumption that OF is restored by performing a decoding according to Equation (5), an inverse DCT should be performed with respect to $R_B$ and $P_F$. In order to reduce the reverse DCT process, Equation (8) can be used during the decoding process.

$$O_F = F(P_F) + (R_F + [U] \cdot R_B) \quad \ldots\ldots (8)$$

According to Equation (8), $R_B$, which remains as a transform coefficient component, without passing through a separate inverse DCT process, is added to the residual of the current block $R_B$, and then is inverse-DCT-transformed at the same time. Accordingly, the inverse DCT process is not performed twice, but is performed only once, to reduce the complexity. Also, in the case of performing the decoding according to Equation (5), the smoothing filter is applied to the sum of $P_F$ and $R_B$, while in the case of performing the decoding according to Equation (8), the smoothing function is applied to the predicted signal $P_F$ only.

As described above, in order to apply the smoothing prediction according to an embodiment of the present invention to the existing working draft, JSVM-4 (Julien Reichel, Heiko Schwarz, and Mathias Wien, "Joint Scalable Video Mode JSVM-4," JVT meeting, Nice, France.), some modification is required in syntax, semantics, and decoding process. First, parts to be modified in syntax are shown in Table 1 below. Table 1 is a part of "Residual in scalable extension syntax" mentioned in Clause G.7.3.8.3 of JSVM-4, and the parts to be modified are underlined.

[Table 1] Part of residual in scalable extension syntax

| residual_in_scalable_extension( ) { | C | Descriptor |
|---|---|---|
| if (adaptive_prediction_flag &&    MbPartPredType(mb_type, 0 ) != Intra_16x16 &&    MbPartPredType(mb_type, 0 ) != Intra_8x8 &&    MbPartPredType(mb_type, 0 ) != Intra_4x4 &&    MbPartPredType(mb_type, 0 ) != Intra_Base ) { | | |
| residual_prediction_flag | 3 \| 4 | Ae(v) |
| if ( residual_prediction_flag && base_mode_flag && constrained_inter_layer_pred( ) ) | | |
| smoothed_reference_flag | 3 \| 4 | Ae(v) |
| } | | |

A flag "smoothed_reference_flag" that is a new syntax item is coded in the case where both residual_prediction_flag and base_mode_flag are all 1 on condition of the single-loop decoding. The single-loop decoding condition is indicated by a function "constrained_inter_layer_pred()". The residual_prediction_flag is a flag that indicates whether the residual prediction is used, and the base_mode_flag is a flag that indicates whether a base-layer skip mode is used. If the value of this flag is 1 (true), it indicates that the corresponding operation is to be performed, while if the value of the flag is 0 (false), it indicates that the corresponding operation is not to be performed. Particularly, in a multi-loop decoding mode, it is to be noted that no overhead of the syntax exists.

In the base-layer (BL) skip mode, a separate motion estimation process is not performed in the current layer, but a motion vector and a macroblock pattern, which have been obtained in the motion estimation process performed in the base layer, are used as they are in the current layer. Accordingly, in comparison to the case where the mode is not used, the amount of computation is reduced, and the coding efficiency is increased since motion information of the current layer is not encoded. However, if motion distribution in the current layer is somewhat different from that in the base layer, deterioration of picture-quality may occur. Accordingly, the base-layer skip mode is mainly used in the case where the interlayer motion distributions are similar to each other.

On the other hand, parts to be modified in semantics are parts that describe the semantics of a smoothed_reference_flag. The meaning of this flag has been described in "Residual in scalable extension semantics" in Clause G. 7.4.8.3 of JSVM-4.

If the smoothed_reference_flag is 1, it means that the smoothing function is applied to the sum of the inter-predicted sample and a residual sample of the base layer, while if the smoothed_refrence_flag is 0, it means that the smoothing function is not applied. If the smoothed_reference_flag does not exist, the value is considered as 0.

Last, parts to be modified in decoding process are described in Clause G.8.4.2.4 of JSVM-4. In this clause, detailed contents of a newly defined smoothing function have been described. In the decoding process, if the smoothed_reference_flag is 1, Clause G.8.4.2.4 is called.

Specifically, $resPred_L[x, y]$ (where, x and y are in the range of 0 to 15, respectively) (the size of a macroblock) that is a luma residual sample array of the base layer obtained from the residual prediction process, and $resPred_{Cb}[x, y]$ and $resPred_{Cr}[x, y]$ (where, x is in the range of 0 to MbWidthC-1 and y is in the range of 0 to MbHeightC-1) that are chroma residual sample arrays of the base layer, are first called. Thereafter, respective luma inter-predicted sample $pred_L[x, y]$ is added to the luma residual sample $resPred_L[x, y]$ to be updated as Equation (9). Here, x and y respectively indicate x coordinate and y coordinate of a pixel included in the current macroblock.

$$\mathrm{pred}_L[x, y] = \mathrm{pred}_L[x, y] + \mathrm{resPred}_L[x, y] \qquad ...... (9)$$

Also, if a chroma_format_idc is not 0 (i.e., in the case of a color image), the respective chroma inter-predicted samples $\mathrm{pred}_{Cb}[x, y]$ and $\mathrm{pred}_{Cr}[x, y]$ are updated as Equation (10).

$$\mathrm{pred}_{Cb}[x, y] = \mathrm{pred}_{Cb}[x, y] + \mathrm{resPred}_{Cb}[x, y]$$

$$\mathrm{pred}_{Cr}[x, y] = \mathrm{pred}_{Cr}[x, y] + \mathrm{resPred}_{Cr}[x, y] \qquad ...... (10)$$

Hereinafter, a process of applying a smoothing function with respect to $\mathrm{pred}_L[x, y]$ updated in Equation (9) and $\mathrm{pred}_{Cb}[x, y]$ and $\mathrm{pred}_{Cr}[x, y]$ updated in Equation (10) will be explained. This process is composed of four steps as shown in FIGs. 5 to 8.

First, the inter-predicted samples updated in Equations (9) and (10) are updated according to Equation (11) as they pass through a smoothing function applying process as shown in FIG. 5.

$$\mathrm{pred}_L[x, y] = ( \mathrm{pred}_L[x\text{-}1, y] + 2*\mathrm{pred}_L[x, y] + \mathrm{pred}_L[x+1, y] + 2 )$$

$$>>2 \text{ with } x=1...14 \text{ and } y=0...15$$

$$\mathrm{pred}_{Cb}[x, y] = ( \mathrm{pred}_{Cb}[x\text{-}1, y] + 2*\mathrm{pred}_{Cb}[x, y] + \mathrm{pred}_{Cb}[x+1, y] + 2 ) \quad ... (11)$$

$$>>2 \text{ with } x = 1...MbWidthC - 2 \text{ and } y = 0...MbHeightC - 1$$

$$\mathrm{pred}_{Cr}[x, y] = ( \mathrm{pred}_{Cr}[x\text{-}1, y] + 2*\mathrm{pred}_{Cr}[x, y] + \mathrm{pred}_{Cr}[x+1, y] + 2 )$$

$$>>2 \text{ with } x = 1...MbWidthC - 2 \text{ and } y = 0...MbHeightC - 1$$

Equation (11) is to embody the application of the smoothing function as the horizontal window (50 in FIG. 5) is moved in the unit of a pixel in the macroblock (60 in FIG. 5). Since the size of a macroblock of a luma component is $16\times16$ and the size of a macroblock of a chroma component is $mbWidthC\times MbHeightC$, the ranges of x and y for the luma component and the chroma component are indicated differently. The smoothing function that is used in Equation (11) is a 1:2:1 linear function.

On the other hand, the inter-predicted samples updated in Equation (11) are updated according to Equation (12) as they pass through a smoothing function applying process as shown in FIG. 6.

$$\mathrm{pred}_L[x, y] = ( \mathrm{pred}_L[x, y\text{-}1] + 2*\mathrm{pred}_L[x, y] + \mathrm{pred}_L[x, y+1] + 2 )$$

$$>>2 \text{ with } x=0...15 \text{ and } y=1...14$$

$$\mathrm{pred}_{Cb}[x, y] = ( \mathrm{pred}_{Cb}[x, y\text{-}1] + 2*\mathrm{pred}_{Cb}[x, y] + \mathrm{pred}_{Cb}[x, y+1] + 2 ) \quad .... (12)$$

$$>>2 \text{ with } x = 0...MbWidthC - 1 \text{ and } y = 1...MbHeightC - 2$$

$$\text{pred}_{Cr}[x, y] = (\text{pred}_{Cr}[x, y\text{-}1] + 2*\text{pred}_{Cr}[x, y] + \text{pred}_{Cr}[x, y\text{+}1] + 2)$$

$$\text{>>2 with } x = 0...\text{MbWidthC} - 1 \text{ and } y = 1...\text{MbHeightC} - 2$$

The inter-predicted samples updated in Equation (12) are updated according to Equation (13) as they pass through the smoothing function applying process as shown in FIG. 7.

$$\text{pred}_{L}[x, y] = (S'_{L}[xP\text{+}x\text{-}1, yP\text{+}y] + 2*\text{pred}_{L}[x, y] + \text{pred}_{L}[x\text{+}1, y] + 2)$$

$$\text{>>2 with } x=0 \text{ and } y=0...15$$

$$\text{pred}_{Cb}[x, y] = (S'_{Cb}[xC\text{+}x\text{-}1, yC\text{+}y] + 2*\text{pred}_{Cb}[x, y] + \text{pred}_{Cb}[x\text{+}1, y]$$

$$+2). \hspace{4cm} .(13)$$

$$\text{>>2 with } x = 0 \text{ and } y = 0...\text{MbHeightC} - 1$$

$$\text{pred}_{Cr}[x, y] = (S'_{Cr}[xC\text{+}x\text{-}1, yC\text{+}y] + 2*\text{pred}_{Cr}[x, y] + \text{pred}_{Cr}[x\text{+}1, y]$$

$$+2)$$

$$\text{>>2 with } x = 0 \text{ and } y = 0...\text{MbHeightC} - 1$$

Here, xP and yP denote absolute coordinates (i.e., position in the frame) of the first luma sample that belongs to the current macroblock, and $S'_{L}[xP+x-1, yP+y]$ denotes the value of a sample having the corresponding absolute coordinates (xP+x-1, yP+y) among the luma samples included in the smoothed macroblock. In the same manner, $S'_{Cb}[xC+x-1, yC+y]$ and $S'_{cr}[xC+x-1, yC+y]$ denote the value of a sample having the corresponding absolute coordinates (xC+x-1, yC+y) among the chroma samples included in the smoothed macroblock. xC and yP denote absolute coordinates of the first chroma sample that belongs to the current macroblock.

Last, the inter-predicted samples updated in Equation (13) are updated according to Equation (14) as they pass through a smoothing function applying process as shown in FIG. 8.

$$\text{pred}_{L}[x, y] = (S'_{L}[xP\text{+}x, yP\text{+}y\text{-}1] + 2*\text{pred}_{L}[x, y] + \text{pred}_{L}[x, y\text{+}1] + 2)$$

$$\text{>>2 with } x=0...15 \text{ and } y=0$$

$$\text{pred}_{Cb}[x, y] = (S'_{Cb}[xC\text{+}x, yC\text{+}y\text{-}1] + 2*\text{pred}_{Cb}[x, y] + \text{pred}_{Cb}[x, y\text{+}1] +$$

$$2)$$

$$\text{>>2 with } x = 0...\text{MbWidthC} - 1 \text{ and } y = 0 \hspace{1cm} ... (14)$$

$$\text{pred}_{Cr}[x, y] = (S'_{Cr}[xC\text{+}x, yC\text{+}y\text{-}1] + 2*\text{pred}_{Cr}[x, y] + \text{pred}_{Cr}[x, y\text{+}1]$$

$$+2)$$

$$\text{>>2 with } x = 0...\text{MbWidthC} - 1 \text{ and } y = 0$$

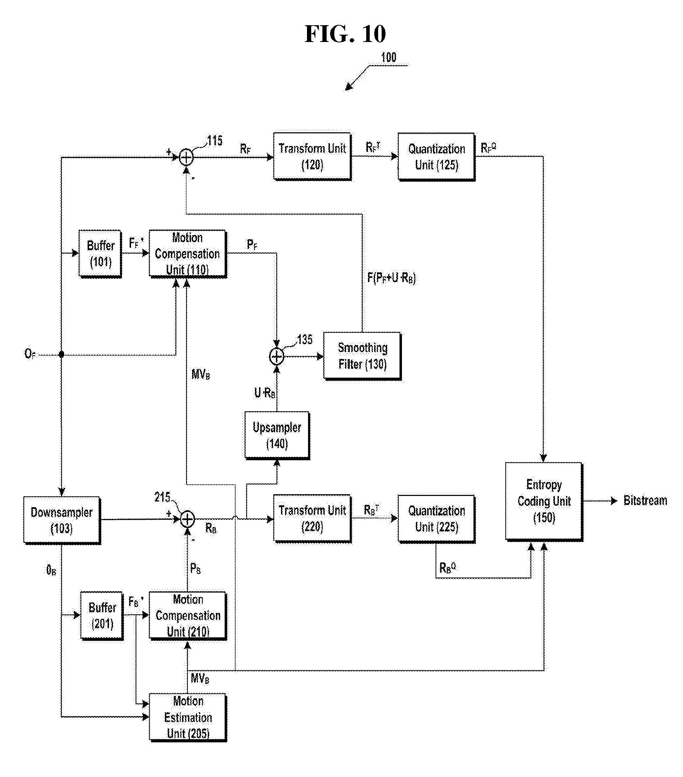

FIG. 10 is a block diagram illustrating the construction of a video encoder 100 according to an embodiment of the present invention.

First, a specified block included in the current block (hereinafter referred to as a "current block") OF is inputted to a downsampler 103. The downsampler 103 performs a spatial and/or temporal down-sampling of the current block OF, and generates a corresponding base-layer block $O_B$.

A motion estimation unit 205 performs a motion estimation for the base-layer block $O_B$ with reference to a neighboring frame $F_B'$, and obtains a motion vector $MV_B$. The neighboring frame being referred to as described above is called a "reference frame". Generally, an algorithm widely used for the motion estimation is a block matching algorithm. This block matching algorithm estimates a displacement that corresponds to the minimum error as a motion vector as moving a given motion block in the unit of a pixel or a subpixel (e.g., 1/2 pixel, and 1/4 pixel) in a specified search area of the reference frame. The motion estimation may be performed using a motion block of a fixed size or using a motion block having a variable size according to a hierarchical variable size block matching (HVSBM) used in H.264.

If the video encoder 100 is in the form of an open-loop codec, the original neighboring frame $F_B'$ stored in a buffer is used as the reference frame. However, if the video encoder is in the form of a closed-loop codec, a frame having been decoded after being encoded (not illustrated) will be used as the reference frame. Hereinafter, the present invention will be explained around the open-loop codec, but it is not limited thereto.

A motion vector $MV_B$ obtained by the motion estimation unit 205 is provided to a motion compensation unit 210. The motion compensation unit 210 extracts a corresponding image among the reference frames $F_B'$ by the motion vector $MV_B$, and generates an inter-predicted block $P_B$. If a bidirectional reference is used, the inter-predicted block can be calculated from an average of the extracted image. If a unidirectional reference is used, the inter-predicted block may be the same as the extracted image.

A subtracter 215 subtracts the inter-predicted block $P_B$ from the base-layer block $O_B$ to generate a residual block $R_B$. The residual block $R_B$ is provided to an upsampler 140 and a transform unit 220.

The upsampler 140 performs an up-sampling of the residual block $R_B$. Generally, n:1 up-sampling is not for simply extending one pixel into n pixels, but is an operation process in consideration of neighboring pixels. Although a smoother down-sampling result may appear as the number of neighboring pixels becomes larger, a somewhat distorted image may be produced, and thus it is required to select a proper number of neighboring pixels. If the resolution of the base layer is the same as the resolution of the current layer, the up-sampling operation performed by the upsampler 140 can be omitted.

The current block OF is also inputted to the motion compensation unit 110, a buffer 101, and a subtracter 115. If the base_mode_flag is 1, i.e., if the motion pattern of the current layer is similar to the motion pattern of the base layer and it corresponds to a base-layer skip mode, the motion vector and the macroblock pattern, which have been obtained in the motion estimation process performed in the base layer, are used in the current layer as they are, and thus it is not required to perform a separate motion estimation process. However, even the determination of a separate motion vector and macroblock pattern through a separate motion estimation process in the current layer is within the scope of the present invention. Hereinafter, the case of using the base-layer skip mode will be explained.

The motion vector $MV_B$ obtained in the motion estimation unit 205 is provided to the motion compensation unit 110. The motion compensation unit 110 extracts a corresponding image among the reference frames $F_F'$ provided from the buffer 101 by the motion vector $MV_B$, and generates an inter-predicted block $P_F$. If the resolution of the base layer is the same as the resolution of the current layer, the motion compensation unit 110 uses the motion vector $MV_B$ of the base layer as the motion vector of the current layer. However, if the resolutions are not the same, the motion compensation unit extends the motion vector $MV_B$ as much as the ratio of the resolution of the current layer to the resolution of the base layer, and uses the extended motion vector as the motion vector of the current layer.

An adder 135 adds a signal $U \cdot R_B$ provided from the upsampler 140 to the signal $P_F$ provided from the motion compensation unit 110, and provides the result of the addition $P_F + U \cdot R_B$ to a smoothing filter 130. This addition process corresponds to the operation process of Equations (9) and (10).

The smoothing filter 130 performs a smoothing of the result of the addition $P_F + U \cdot R_B$ by applying a smoothing function, i.e., a deblocking function. As the smoothing function, the deblocking function used in the conventional H.264 or a combination of the up-sampling function and the down-sampling function may be used. However, in order to reduce the amount of computation according to the low complexity condition, a simple linear function as in Equation (7) may be used. Although only the linear function is applied, the coding performance is not greatly reduced in comparison to the case where a complex function is applied. This linear function can be applied in the unit of a block (i.e., sub-block or macroblock), and can be applied to a block boundary or a block boundary and the entire inside of the block. In the preferred embodiment of the present invention, examples of applying the smoothing function to the block boundary and the entire inside of the block in four steps have been explained with reference to FIGs. 5 to 8 and Equations (11) to (14). Of course, the order of the four steps can be changed.

A subtracter 115 subtracts a signal $F(P_F + U \cdot R_B)$, which is provided as a result of the smoothing performed by the smoothing filter 130, from the current block OF, and generates a residual signal $R_F$ of the current layer.

A transform unit 120 performs a spatial transform with respect to the residual signal $R_F$, and generates transform coefficients $R_F^T$. A discrete cosine transform (DCT) and a wavelet transform may be used as the spatial transform method. In the case of using the DCT, the transform coefficients will be DCT coefficients, while in the case of using the wavelet transform, the transform coefficients will be wavelet coefficients.

A quantization unit 125 performs quantization of the transform coefficients $R_F^T$, and generates quantization coefficients $R_F^Q$. The quantization is a process of representing the transform coefficients $R_F^T$ expressed by certain real values by discrete values. For example, the quantization unit 125 divides the transform coefficients expressed by certain real values into specified quantization steps, and rounds the resultant values off to the nearest whole numbers.

The residual signal $R_B$ of the base layer is also transformed into quantization coefficients $R_B^Q$ through a transform unit 220 and a quantization unit 225.

An entropy coding unit 150 performs a lossless coding of the motion vector $MV_B$ estimated by the motion estimation unit 205, the quantization coefficients $R_F^Q$ provided from the quantization unit 125, and the quantization coefficients $R_B^Q$ provided from the quantization unit 225, and generates a bitstream. A Huffman coding, arithmetic coding, variable length coding, and others, may be used as the lossless coding method.

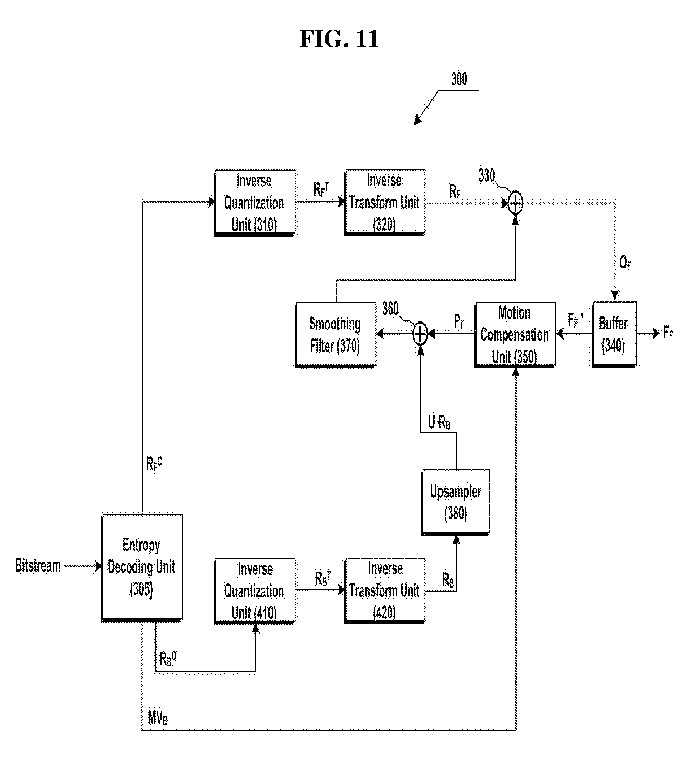

FIG. 11 is a block diagram illustrating the construction of a video decoder 300 according to an embodiment of the present invention.

An entropy decoding unit 305 performs lossless decoding on an input bitstream, and extracts texture data $R_F^Q$ of the current block, texture data $R_B^Q$ of a base-layer block corresponding to the current layer, and a motion vector $MV_B$ of the base-layer block. The lossless decoding is a process that is reverse to the lossless coding process in the encoder.

The texture data $R_F^Q$ of the current block is provided to an inverse quantization unit 310, and the texture data $R_B^Q$ of a base-layer block is provided to an inverse quantization unit 410. The motion vector $MV_B$ of the base-layer block is provided to a motion compensation unit 350.

The inverse quantization unit 310 performs inverse quantization on the texture data $R_F^Q$ of the current block. This inverse quantization process is a process of restoring values that match indexes generated in the quantization process using the same quantization table as that used in the quantization process.

An inverse transform unit 320 performs inverse transform on the result of the inverse quantization. The inverse transform is a process reverse to the transform process in the encoder. Specifically, an inverse DCT transform and an inverse wavelet transform may be used as the inverse transform unit, and as the result of the inverse transform, a residual signal $R_F$ for the current block is restored.

On the other hand, an inverse quantization unit 410 performs inverse quantization on the texture data $R_B^Q$ of the base-layer block, and an inverse transform unit 420 performs inverse transform on the result of the inverse quantization $R_B^T$. As the result of the inverse transform, a residual signal $R_B$ for the base-layer block is restored. The restored residual signal $R_B$ is provided to an upsampler 380.

The upsampler 380 performs an up-sampling of the residual data $R_B$. If the resolution of the base layer is the same as the resolution of the current layer, the up-sampling operation performed by the upsampler 380 can be omitted.

The motion compensation unit 350 extracts a corresponding image among the reference frames $F_F'$ provided from a buffer 340 by the motion vector $MV_B$, and generates an inter-predicted block $P_F$. If the resolution of the base layer is the same as the resolution of the current layer, the motion compensation unit 350 uses the motion vector $MV_B$ of the base layer as the motion vector of the current layer. However, if the resolutions are not the same, the motion compensation unit extends the motion vector $MV_B$ as much as the ratio of the resolution of the current layer to the resolution of the base layer, and uses the extended motion vector as the motion vector of the current layer.

An adder 360 adds a signal $U \cdot R_B$ provided from the upsampler 380 to the signal $P_F$ provided from the motion compensation unit 350, and provides the result of the addition $P_F + U \cdot R_B$ to a smoothing filter 370. This addition process corresponds to the operation process of Equations (9) and (10).

The smoothing filter 370 performs a smoothing of the result of the addition $P_F + U \cdot R_B$ by applying a smoothing function, i.e., a deblocking function. As the smoothing function, the same function as the smoothing function used in the smoothing filter 130 as illustrated in FIG. 10 can be used.

An adder 330 adds a signal $F(P_F + U \cdot R_B)$, which is provided as a result of the smoothing performed by the smoothing filter 370, to the residual block $R_F$ generated as a result of the inverse transform performed by the inverse transform unit 320. Accordingly, the current blocks OF are restored, and by combining a plurality of current blocks OF, one frame $F_F$ is restored. A buffer 370 temporarily stores the finally restored frame $F_F$, and provides the stored frame as a reference frame $F_F'$ during the restoration of another frame.

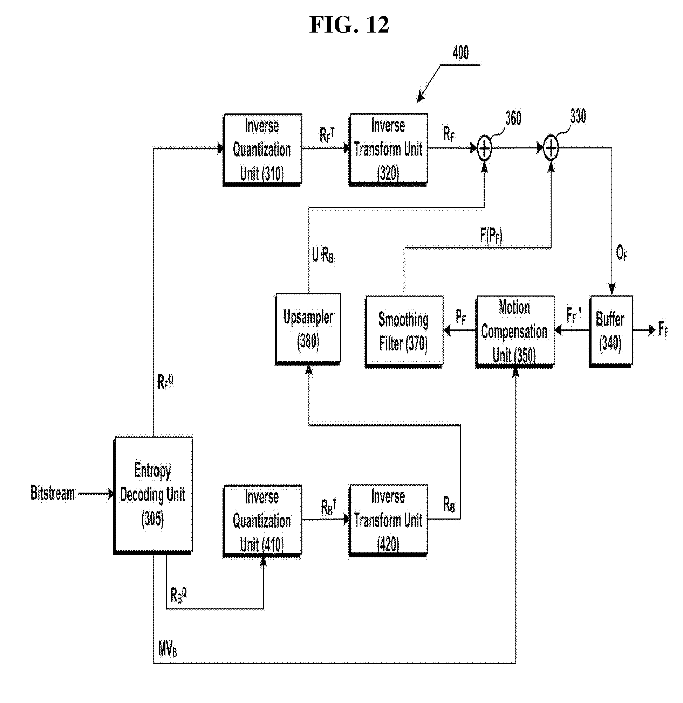

On the other hand, a video decoder 400 that restores the current block according to Equation (8), as illustrated in FIG. 12, is somewhat different from the video decoder 300 as illustrated in FIG. 11.

Referring to FIG. 12, the inter-predicted block $P_F$ provided from the motion compensation unit 350 is directly inputted to the smoothing filter 370 to be smoothed, and the adder 360 adds the result of up-sampling $U \cdot R_B$ performed by the upsampler 380 to the residual block $R_F$. Last, the adder 330 adds the result of smoothing $F(P_F)$ to the result of addition $R_F + U \cdot R_B$ to restore the current block OF.

In the embodiments of the present invention as illustrated in FIGs. 10 to 12, it is exemplified that a video frame composed of two layers is coded. However, it will be fully understood by those skilled in the art that the present invention is not limited thereto, and can also be applied to the coding of a video frame composed of three or more layers.

The respective constituent elements of FIGs. 10 to 12 may be implemented by software such as task that is performed in a specified area of a memory, class, subroutine, process, object, execution thread or program, or hardware such as a FPGA (Field Programmable Gate Array) or an ASIC (Application Specific Integrated Circuit), and by a combination of software and hardware. The respective constituent elements may be included in a computer-readable storage medium or parts thereof may be distributed in a plurality of computers. As described above, according to embodiments of the present invention, the performance of a codec that uses a residual prediction or an inter-prediction can be improved.

Particularly, the performance of a codec that uses an intra-base prediction having a low-complexity decoding condition can be improved.

The preferred embodiments of the present invention have been described for illustrative purposes, and those skilled in the art will appreciate that various modifications, additions and substitutions are possible without departing from the scope and spirit of the invention as disclosed in the accompanying claims. Therefore, the scope of the present invention should be defined by the appended claims and their legal equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A multilayer-based video encoding method comprising:

   (a) obtaining a difference between a predicted block (13) for a second block (10) of a lower layer, which corresponds to a first block (20) included in a current layer, and the second block;
   (b) adding the obtained difference to a predicted block (23) for the first block;
   (c) smoothing a third block generated as a result of the addition using a smoothing function; and
   (d) encoding a difference between the first block (20) and the smoothed third block.

2. The video encoding method of claim 1, wherein the predicted block for the first block and the predicted block for the second block are inter-predicted blocks.

3. The video encoding method of claim 1 or 2, wherein the predicted block (13) for the second block is obtained through a motion estimation process and a motion compensation process.

4. The video encoding method of claim 3, wherein the predicted block (23) for the first block is obtained through a motion compensation process using motion vectors generated in the motion estimation process.

5. The video encoding method of any preceding claim, further comprising up-sampling the obtained difference prior to (b);
   wherein the difference added in (b) is the up-sampled difference.

6. The video encoding method of any preceding claim, wherein the smoothing function is indicated as a linear combination of a pixel to be smoothed and its neighboring pixels.

7. The video encoding method of claim 6, wherein the neighboring pixels are two pixels adjacent to the pixel to be smoothed in a vertical or horizontal direction.

8. The video encoding method of claim 7, wherein a weight value of the pixel to be smoothed is 1/2, and weight values of the two neighboring pixels are 1/4, respectively.

9. The video encoding method of any of claims 6-8, wherein (c) includes smoothing the pixel as moving a horizontal window, which includes the pixel to be smoothed and the neighboring pixels located on left and right sides of the pixel, within the third block.

10. The video encoding method of any of claims 6-9, wherein (c) includes smoothing the pixel as moving a vertical window, which includes the pixel to be smoothed and the neighboring pixels located on upper and lower sides of the pixel, within the third block.

11. The video encoding method of any of claims 6-10, wherein (c) includes smoothing the pixel as moving a horizontal window, which includes a pixel adjacent to a left boundary of the third block and the neighboring pixels located on left and right sides of the pixel, along the left boundary of the third block.

12. The video encoding method of any of claims 6-11, wherein (c) includes smoothing the pixel as moving a vertical window, which includes a pixel adjacent to an upper boundary of the third block and the neighboring pixels located on upper and lower sides of the pixel, along the upper boundary of the third block.

13. The video encoding method of any of claims 9-12, wherein the third block is a macroblock or a sub-block.

14. A method of generating a bitstream by encoding a block of a video frame with a difference between the block and a predicted block, the method comprising inserting information that indicates whether the predicted block has been smooth-filtered into the bitstream.

15. The method of claim 14, wherein the predicted block is obtained from an inter-predicted block of the block and a residual block of a lower layer of the block.

16. The method of claim 15, further comprising inserting information that indicates where the block is predicted by the predicted block into the bitstream.

17. The method of any of claims 14-16, wherein a residual prediction is applied to the block, and the block is single-loop-decoded.

18. A storage medium comprising:

   a first area that includes information encoded by subtracting a predicted block from a block of a video signal; and
   a second area that includes information indicating whether the predicted block has been smooth-filtered.

19. The storage medium of claim 18, wherein the predicted block is obtained from an inter-predicted block of the block and a residual block of a lower layer of the block.

20. The storage medium of claim 19, further comprising a third area that includes information indicating whether the block is predicted by the predicted block.

21. The storage medium of any of claims 18-20, wherein a residual prediction is applied to the block, and the block is single-loop-decoded.

22. A method of decoding a current block of a video frame from a predicted block, the method comprising:

   restoring the predicted block;
   smooth-filtering the predicted block; and
   restoring the current block from the smooth-filtered predicted block.

23. The method of claim 22, wherein the predicted block is obtained from an inter-predicted block of the current block and a residual block of a lower layer of the current block.

24. The method of claim 22 or 23, further comprising confirming information that indicates whether the predicted block has been smooth-filtered.

25. The method of claim 23 or 24, wherein the smooth-filtering is indicated as a linear combination of a pixel to be smoothed and its neighboring pixels.

26. The method of claim 25, wherein the neighboring pixels are two pixels adjacent to the pixel to be smoothed in a vertical or horizontal direction.

27. The method of claim 26, wherein the smooth-filtering weights the pixel to be smoothed by 1/2, and weights the two neighboring pixels by 1/4, respectively.

28. The method of claim 26 or 27, wherein if the pixel to be smoothed is a pixel adjacent to a boundary of the block, pixels of blocks adjacent to the block are selected as the neighboring pixels.

29. A method of decoding a current block of a video frame from a predicted block, the method comprising:

> judging whether the current block uses the predicted block;
> judging whether the current block uses a base-layer skip mode;
> judging whether the current block uses a smooth-filtering;
> restoring the predicted block, and smooth-filtering the predicted block; and
> restoring the current block from the predicted block.

30. The method of claim 29, wherein the predicted block is obtained from an inter-predicted block of the current block and a residual block of a base layer of the current block.

31. The method of claim 30, wherein the smooth filtering is indicated as a linear combination of a pixel of the current block and two adjacent pixels.

32. The method of claim 30 or 31, wherein the pixel of the current block forms a linear combination with two adjacent pixels located on upper and lower sides or left and right sides of the pixel.

33. A multilayer-based video decoding method comprising:

> (a) restoring residual data of a first block from texture data of the first block of a current frame included in an input bitstream;
> (b) restoring a residual signal for a second block of a base layer that is included in the bitstream and corresponds to the block;
> (c) adding the first residual signal to the second residual signal;
> (d) smoothing an inter-predicted block for the first block using a smoothing filter; and
> (e) adding the result of the addition to the smoothed inter-predicted block.

34. A multilayer-based video encoder comprising:

> a portion that obtains a difference between a predicted block for a second block of a lower layer, which corresponds to a first block included in a current layer, and the second block;
> a portion that adds the obtained difference to a predicted block for the first block;
> a portion that smooths a third block generated as a result of the addition using a smoothing function; and
> a portion that encodes a difference between the first block and the smoothed third block.

35. A multilayer-based video decoder comprising:

> a portion that restores residual data of a first block from texture data of the first block of a current frame included in an input bitstream;
> a portion that restores a residual signal for a second block of a base layer that is included in the bitstream and corresponds to the block;
> a portion that adds the residual signal for the second block to a predicted block for the first block;
> a portion that smooths a third block generated as a result of the addition using a smoothing filter; and
> a portion that adds the residual signal for the first block to the smoothed third block.

# FIG. 1 (Related Art)

# FIG. 2 (Related Art)

## FIG. 3 (Related Art)

# FIG. 4

Forward Reference Frame     Current Frame     Backward Reference Frame

Current Block
Predicted Block

Layer 2

21
20
22

S6
Difference
S5

Inter-Predicted Block Generation S3

Smoothing

23

Quantization S7

Inter-Predicted Block Generation S1

Addition S4

13

Layer 1

11
12

Difference S2

10

Base Frame

EP 1 809 040 A2

# FIG. 5

# FIG. 6

## FIG. 7

## FIG. 8

# FIG. 9

# FIG. 10

100

# FIG. 11

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JULIEN REICHEL ; HEIKO SCHWARZ ; MATHIAS WIEN.** Joint Scalable Video Mode JSVM-4. *JVT meeting*